## Europäisches Patentamt
## European Patent Office
### Office européen des brevets

(19)

(11) Veröffentlichungsnummer: **0 295 322**
**A1**

(12) # EUROPÄISCHE PATENTANMELDUNG

(21) Anmeldenummer: **87108823.3**

(22) Anmeldetag: **19.06.87**

(51) Int. Cl.4: **B01J 3/04** , //C01F7/00, **C22B3/00**

(43) Veröffentlichungstag der Anmeldung:
**21.12.88 Patentblatt  88/51**

(84) Benannte Vertragsstaaten:
**AT BE CH DE ES FR GB GR IT LI LU NL SE**

(71) Anmelder: **PREUSSAG Aktiengesellschaft Metall**
**Rammelsberger Strasse 2**
**D-3380 Goslar 1(DE)**

(72) Erfinder: **Hanusch, Kunibert, Dr.-Ing.**
**Caspar-David-Friedrich-Weg 11**
**D-3380 Goslar(DE)**
Erfinder: **Janssen, Klaus, Dipl.-Ing.**
**Kaisertorstrasse 3**
**D-3380 Goslar(DE)**

(74) Vertreter: **Rücker, Wolfgang, Dipl.-Chem.**
**Hubertusstrasse 2**
**D-3000 Hannover 1(DE)**

(54) **Verfahren zur Durchführung chemischer Prozesse unter Druck und Vorrichtung zur Duchführung des Verfahrens.**

(57) Beschrieben wird ein Verfahren zur Durchführung chemischer Prozesse unter Druck und eine Vorrichtung zur Durchführung des Verfahrens, wobei der Druck hydrostatisch erzeugt wird, dadurch daß die Aufgabe des Reaktionsgemisches beispielsweise übertage erfolgt unter Verwendung einer Rohrleitung (2) zu dem auf einer Sohle (3) eines Bergwerkschachtes stehenden Reaktor (4), der jede herkömmliche Form haben kann, und wobei der Druck sich aus der Tiefe des Schachtes bzw. der Länge der Rohrleitung und natürlich der Wichte des Reaktionsgemisches ergibt. Anstelles eines Bergwerkschachtes kann auch im Gebirge, in bestimmten Meerestiefen oder in Binnenseen, z. B. von Bohrinseln aus, gearbeitet werden.

FIG.1

EP 0 295 322 A1

## Verfahren zur Durchführung chemischer Prozesse unter Druck und Vorrichtung zur Durchführung des Verfahrens

Die Nutzung von Drücken spielt in verschiedenster Weise bei der Durchführung chemischer Prozesse eine wichtige Rolle.

Bei der Synthese organischer Verbindungen z. B. kann durch Anwendung hoher Drücke das chemische Gleichgewicht so weit verschoben werden, daß wirtschaftliche Umsätze erzielt werden. Dies gilt für viele bekannte Syntheseverfahren, die bei niedrigem Druck völlig unbefriedigend verlaufen. Zur Erzeugung solcher hohen Drücke sind entsprechende Apparaturen und Maschinen erforderlich, die hinsichtlich Material und Fertigung eine Außerordentlich hohe Kapitalinvestition erfordern und deren Betrieb zu hohen Kosten geschieht.

Zu solchen Apparaturen gehören Reaktoren, Autoklaven, Wärmetauscher und dergleichen sowie die den Druck erzeugenden Maschinen, nämlich Verdichter, vorzugsweise Kolben-, Turbo- und Membranverdichter, Zentrifugal-und Membranpumpen, mit denen die zu behandelnden Medien auf den erforderlichen Druck gebracht werden (Ullmann, Enzyklopädie der technischen Chemie, 4. Aufl., Bd. 3, S. 83 ff.).

Aber auch in der Metallurgie wird in großem Umfange bei Laugungs-und Raffinationsprozessen unter Überdruck zur Gewinnung von insbesondere Nichteisenmetallen wie Nickel, Kobalt und dergleichen gearbeitet, insbesondere bei der Hydrometallurgie. Auch diese Verfahren - wenngleich nicht unter so extremen Drücken wie im Falle der organischen Synthese - erfordern Drücke von beträchtlichem Ausmaß, damit solche hydrometallurgischen Prozesse wirtschaftlich durchgeführt werden können, so daß auch bei solchen unter Druck ablaufenden Laugungs- und Raffinationsprozessen aufwendige und teuere Geräte und Maschinen zur Erzeugung und Regelung solcher Drücke eingesetzt werden müssen (V.N. Mackiw, H. Veltmann "Hydrometallurgie unter Druck", Bd. 22, 1969, Beiheft).

Laugungsprozesse von Metallkonzentraten, beispielsweise eisenhaltigen, sulfidischen Zinkkonzentraten aus der Flotation eines marmatithaltigen Erzes unter Verwendung von Druck und Schwefelsäure als Laugungsmedium, sind beispielsweise beschrieben in der kanadischen Patentschrift 90 45 91. Andere Laugungsverfahren unter Druck von Zinksulfiden sind beschrieben in der kanadischen Patentschrift 97 13 68, bei der Drücke zwischen 5 psi und 100 psi angewandt werden die sich je nach Verfahren auf den Sauerstoffpartialdruck beziehen. Ein Sauerstoffpartialdruck von beispielsweise 7 atü entspricht einem Luftdruck von etwa 35 atü.

In der kanadischen Patentschrift 1 049 953 ist ein zweistufiges Drucklaugungsverfahren beschrieben, das angewandt wird zur Gewinnung von Zink aus zink- und eisenhaltigen, sulfidischen Mineralien. Auch hierbei werden Drücke, immer bezogen auf den Sauerstoffpartialdruck, von etwa 100 kPa angewandt.

In der kanadischen Patentschrift 1 104 838 ist ein Laugungsverfahren unter Druck von Metallsulfiden, insbesondere die Laugung von Zinksulfid, beschrieben mit gleichzeitiger Oxidation des Sulfidschwefels zum elementaren Schwefel, welches ebenfalls unter Drücken in der Größenordnung von bis zu 3000 kPa und erhöhten Temperaturen durchgeführt wird.

Alle diese Verfahren benötigen zur Erzeugung des Druckes hohe investitionen an druckerzeugenden Maschinen.

Weitere bekannte Prozesse, bei denen höhere Drücke angewandt werden müssen, sind zum Beispiel der alkalische Bauxitaufschluß und der Aufschluß von Kupfer, Nickel oder Kobalt enthaltenden Stoffen durch eine ammoniakalische Ammoniumsulfatlösung unter Druck. Auch aus den Lösungen, die durch Druckoxidation in den heterogenen Systemen bestehend aus Erz, wäßriger Lösung und angewandtem Reaktionsgas, erzeugt werden, kann nach Abtrennung der wäßrigen Lösung unter erhöhtem Druck reduziert werden. Dies ist für die Metall Kupfer, Nickel und Kobalt erprobt.

Solche unter Druck ablaufenden Verfahren gibt es in großer Anzahl, die allerdings durch den Einsatz hochwertiger Maschinen aufwendig und kostspielig werden.

Aufgabe der vorliegenden Erfindung ist es daher, solche an sich bekannten unter höheren Drücken ablaufenden chemischen Synthese-, Laugungs- und Raffinationsprozesse dadurch in ihren Investitionskosten, in ihrer apparativen Ausstattung so zu vereinfachen, daß sie kostengünstiger und mit einfacherem Material insbesondere ohne teuere, komplizierte und störanfällige Pumpen durchführbar sind.

Erreicht wird das erfindungsgemäß dadurch, daß die Erzeugung des Druckes hydrostatisch erfolgt.

Diese hydrostatische Druckerzeugung ist sowohl für homogene als auch für heterogene Reaktionssysteme gegeben und sie kann zusammen mit den sonstigen Apparaturen, die zur Durchführung der Druckreaktion benötigt werden, eingesetzt werden, insbesondere dem eigentlichen Druckreaktor, der kontinuierlich oder chargenweise arbeitet und aus einem Druckgefäß oder einem Rohr bestimmter Länge besteht, einem Heizsystem, das dem Reaktionssystem Energie zuführt, und dem Entspannungssystem zur Rückführung des ausreagierten heterogenen Reaktionssystems auf niedrige Drücke und Temperaturen.

Das aufwendige Pumpsystem, daß sonst immer notwendig wird, wenn in einem kontinuierlichen Betrieb eine Suspension durch einen Reaktor oder ein Reaktionssystem gepumpt werden muß und der Druck sich nicht in einem geschlossenen System durch Temperatur- und damit Dampfdruckerhöhung aufbaut, entfällt hier.

Die Erzeugung des hydrostatischen Druckes kann auf mehrere, im Prinzip jedoch gleiche Weise erzeugt werden, beispielsweise dadurch, daß der unter erhöhtem Druck ablaufende Prozess in untertägigen Räumen in Bergwerken durchgeführt wird, wobei die Lösung oder Suspension von übertage über eine Rohrleitung, die in einem Schacht verläuft, dem Reaktor zugeführt wird. Durch den sich in der Rohrleitung, die in dem Bergwerkschaft oder einem anderen Schacht verläuft, aufbauenden hydrostatischen Druck wird in dem untertage angeordneten, mit der Rohrleitung in Verbindung stehenden Reaktor der erforderliche Druck erzeugt.

Die Erzeugung des Druckes als Funktion der Höhe der Saule im Rohrleitungssystem bzw. der Tiefe des Schachtes gelingt ohne den Einsatz aufwendiger und Energie verbrauchender Pumpen wie beispielsweise Kolben-Membranpumpen. Das den Reaktor verlassende Reaktionsgut kann anschließend durch eine Steigleitung im Schacht wieder zutage gefördert werden.

Es ist lediglich allenfalls eine kleine, einfache Pumpe erforderlich, die bei einem solchen Verfahren die Aufgabe hat, den Druckverlust in der Rohrleitung sowie im Reaktor auszugleichen und gegebenenfalls einen geringen Drucküberschuß zu erzeugen.

Anstelle dieses Prinzips, in einem Schacht eines Bergwerkes zum Beispiel zu praktizieren, ist es auch möglich, eine andere Höhendifferenz auszunutzen, beispielsweise im Gebirge oder im Meer, von einer stationären oder einer schwimmenden Bohrinsel aus, wobei dann der Reaktor viele Meter tief auf dem Meeresgrund angeordnet ist. Statt im Meer kann natürlich auch ein solches Verfahren in einem tiefen Binnensee ausgeübt werden.

Die Erzeugung des gewünschten Druckes ist, wie oben gesagt, nur abhängig von der Höhe der Wassersäule, die in einer von der Erdoberfläche aus abwärtsführenden Rohrleitung aufgebaut wird.

Die Erfindung wird nun anhand der beiliegenden Zeichnung, in der Ausführungsbeispiele enthalten sind, näher erläutert.

In der Zeichnung stellen dar:

Fig. 1 ein Druckerzeugungssystem gemäß der Erfindung in einem Schacht,

Fig. 2 ein System, ähnlich dem der Fig. 1, mit einem anderen Reaktor und

Fig. 3 ein Heizsystem für ein Reaktorrohr, beispielsweise gemäß Fig. 2.

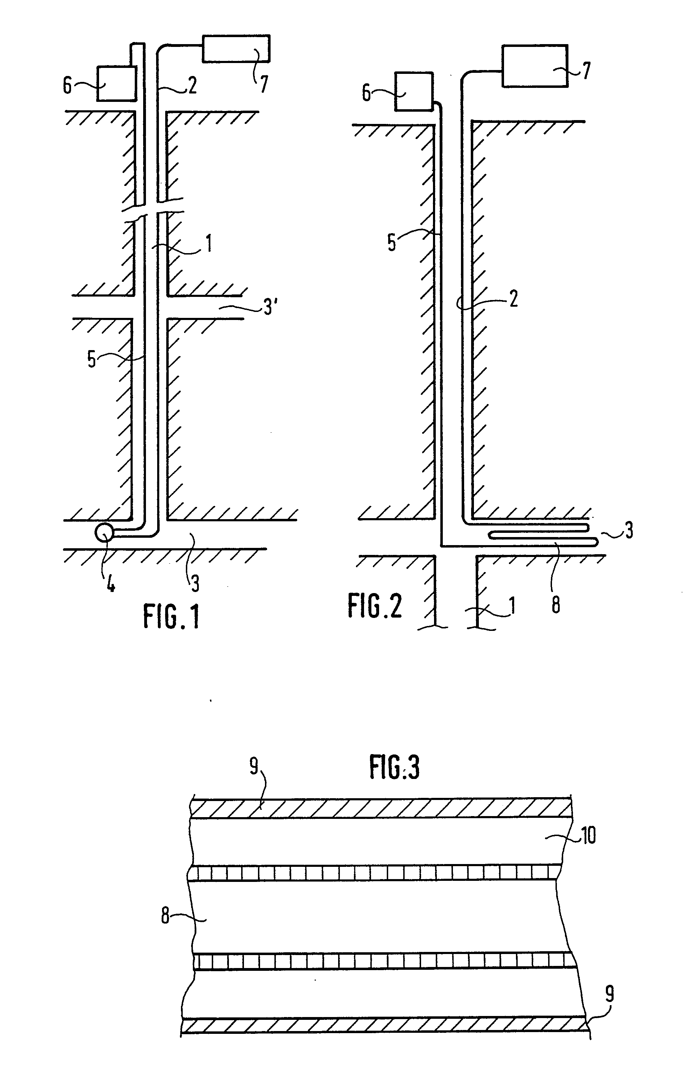

In Fig. 1 bezeichnet das Bezugszeichen 1 einen Schacht, beispielsweise den Schacht eines stillgelegten oder noch im Betrieb befindlichen Bergwerks, in dem eine Rohrleitung 2 zu einem auf der Sohle 3 des Schachtes stehenden Reaktor 4 führt.

Ein Rohrleitung 5 führt von dem Reaktor 4 wieder nach oben zu einem Aufnahmebehälter 6. Das Rechteck 7 am oberen Ende des Rohres 2 kann Aufgabeeinrichtung für eine zu behandelnde Suspension, beispiels weise eine Erzsuspension, oder für eine Lösung darstellen, die mit entsprechenden Einrichtungen versehen ist und die beispielsweise auch eine Pumpe geringer Leistung und einfacher Konstruktion enthält, mit der die Suspension durch die Rohrleitung hindurch zum Reaktor 4 gepumpt wird und die lediglich den Druckverbrauch in den Rohrleitungen und im Reaktor überwinden muß.

Bei einer solchen Suspension kann es sich um eine Suspension handeln wie sie in der kanadischen Patentschrift 90 45 91 oder 97 13 68 beschrieben ist. In letzterer liegt der aufzuwendende Druck z. B. bei 35 atü, so daß der Schacht bei einer Wichte der Suspension von $\gamma = 1$ 350 m tief sein müßte, was in der Praxis ohne weiteres zu verwirklichen ist, da Schächte dieser Tiefe in großer Zahl vorhanden sind.

Fig. 2 zeigt ein ähnliches System der Fig. 1. Auch hier ist wieder mit dem Bezugszeichen 2 die Falleitung bezeichnet und mit dem Bezugszeichen 1 der Schacht. Statt des Reaktorgefäßes 4 ist jedoch in der erforderlichen Tiefe eine Rohrschlange 8 vorhandem die ähnlich wie beim oben beschriebenen Bauxitaufschluß ausgebildet und beheizt sein kann.

Fig. 1 zeigt auch, daß im gleichen Umlauf der Suspension oder Lösung Reaktionen auf verschiedenen Sohlen, z. B. auf Sohle 3′, d. h. bei verschiedenen Drücken durchgeführt werden können, indem entsprechend aufgestellte Reaktoren in Reihe geschaltet durchströmt werden.

Das Steigrohr 5 führt das ausreagierte Gemisch wieder nach oben zur weiteren Verwendung. Das Kästchen 7 hat eine ähnliche Aufgabe wie das in Fig. 1 beschriebene.

Die beiden hier beschriebenen Vorrichtungen sind vorzugsweise für ein kontinuierliches Verfahren gedacht, diskontinuierliche Arbeits weise ist natürlich auch möglich, wenn entsprechende Schaltungen und Suspensionsführungen vorgenommen werden.

In Fig. 3 ist ein Schnitt durch ein Reaktionsrohr gezeigt, das ähnlich wie beim Rohrreaktor für den Bauxitaufschluß aus dem eigentlichen Reaktorrohr 8 und dem dieses umgebenden Heizrohr 9 besteht. Zwischen beiden strömt in dem Zwischenraum 10 das Heizmittel.

Günstig ist unter Umständen, zur Einsparung von Heinzenergie die Druckleitung und die Steigleitung im Schacht im gegenseitigen Kontakt zu führen, so daß Wärmeaustausch stattfindet.

Das in Fig. 3 im Schnitt gezeigte Doppelrohr kann aber auch als kombiniertes Druck- und Steigrohr dienen, dergestalt, daß im Kernrohr 8 der Druck aufgebaut wird und das Mantelrohr 9 als Steigrohr dient.

Die Rohrleitungen 2 und 5, die in die Tiefe hinabführen und aus dieser wieder heraus, sind vorzugsweise aus einzelnen Rohrtouren zusammengesetzt, z. B. wie sie zum Erschließen von Erdölvorkommen verwendet werden, die mit Gewindenippeln und -muffen an ihren Enden ausgestaltet sind und auf jede gewünschte Länge zusammengeschraubt werden können, wobei jedoch das Material so gewählt werden muß oder das Rohr, insbesondere auf seinen mit der Lösung oder Suspension in Berührung kommenden Oberflächen, so gestaltet werden muß, daß keine Korrosion auftritt.

Im kontinuierlichen Betrieb erfährt allerdings der hydrostatische Druck eine Erhöhung, indem ein Druckverbrauch beim Durchstrom des Reaktors 4, 8 und des Steigrohres 5 eintritt. Dieser zusätzliche Druck muß im Fallrohr 2 bzw. in der Aufgabeeinrichtung 7 aufgebracht werden und steht somit im Reaktor an.

Die Reaktionen verlaufen also im Reaktor beim chargenweisen Betrieb unter dem hydrostatischen Druck und beim kontinuierlichen Betrieb unter einem Gesamtdruck, der sich aus dem hydrostatischen Druck und dem Staudruck zusammensetzt.

## Ansprüche

1. Verfahren zur Durchführung chemischer Prozesse unter Aufwendung von Druck, dadurch gekennzeichnet, daß der Druck hydrostatisch durch eine Lösung oder Suspension erzeugt wird, die dem Reaktor des Prozesses zugeführt wird.

2. Vorrichtung zur Durchführung des Verfahrens nach Anspruch 1, dadurch gekennzeichnet, daß Reaktor (4, 8) und Aufgabevorrichtung (7) auf unterschiedlichen Niveau angeordnet und durch eine Rohrleitung (2) miteinander verbunden sind.

3. Vorrichtung nach Anspruch 2, dadurch gekennzeichnet, daß der Reaktor auf einer Sohle (3) eines Bergwerkschachtes angeordnet ist und die Aufgabevorrichtung (7) übertage und beide durch eine Rohrleitung (2) miteinander verbunden sind und der Reaktor über eine Steigleitung (5) mit einem Aufnahmebehälter (6) für das Reaktionsgut verbunden ist.

4. Vorrichtung nach Anspruch 2 und 3, dadurch gekennzeichnet, daß der statische Druck erzeugt wird durch Anordnung der Vorrichtung im Gebirge, im Meer oder in einem Binnensee.

5. Vorrichtung nach Anspruch 2 bis 4, dadurch gekennzeichnet, daß Druck- und Steigleitung (2 u. 5) im Schacht untereinander zwecks Wärmeaustausch in äußeren Kontakt gebracht sind.

6. Vorrichtung nach Anspruch 2 bis 5, dadurch gekennzeichnet, daß Druck- und Steigleitung (2 u. 5) von einem Doppelrohr aus Mantel- und Kernrohr gebildet sind.

FIG.1

FIG.2

FIG.3

<table>
<tr><td colspan="2">Europäisches Patentamt</td><td>EUROPÄISCHER RECHERCHENBERICHT</td><td>Nummer der Anmeldung</td></tr>
</table>

**Europäisches Patentamt**

# EUROPÄISCHER RECHERCHENBERICHT

Nummer der Anmeldung

EP 87 10 8823

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 606 999 (H.L. LAWLESS) <br> * Auszug; Spalte 1, Zeilen 3-49; Spalte 3, Zeilen 4-34; Spalte 5, Zeile 34 – Spalte 6, Zeile 75; Spalte 9, Zeilen 34-50; Figuren 1-3 * <br> --- | 1-3,5,6 | B 01 J 3/04 // <br> C 01 F 7/00 <br> C 22 B 3/00 |
| X | US-A-3 264 099 (P.H. JOHNSON) <br> * Spalte 1, Zeilen 10-15; Spalte 3, Zeilen 43-48; Spalte 4, Zeilen 11-21; Figuren 1-3 * <br> --- | 1-3 | |
| A | US-A-3 736 187 (J.H. HARRISON et al.) <br> * Figur 1; Auszug; Spalte 2, Zeilen 22-58; Spalte 3, Zeilen 7-46 * <br> --- | 1,4 | |
| L | DE-A-3 609 002 (PREUSSAG)(24-09-1987) <br> ----- | 1-6 | |
| | | | **RECHERCHIERTE SACHGEBIETE (Int. Cl.4)** <br><br> B 01 J <br> C 02 F <br> C 22 B <br> H 01 M |

Der vorliegende Recherchenbericht wurde für alle Patentansprüche erstellt

| Recherchenort | Abschlußdatum der Recherche | Prüfer |
|---|---|---|
| DEN HAAG | 18-02-1988 | SIEM T.D. |

EPO FORM 1503 03.82 (P0403)

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument